# EUROPÄISCHE PATENTSCHRIFT

(11) **EP 1 870 273 B1**
(45) Veröffentlichungstag und Bekanntmachung des Hinweises auf die Patenterteilung: **14.03.2018**
(21) Anmeldenummer: 07010740.4
(22) Anmeldetag: 31.05.2007
(51) Int. Cl.: B60K 6/36, B60K 6/365, B60K 6/40, B60K 6/405, B60K 6/48, B60K 6/387, B60K 6/547, F02N 11/00

(54) **Hybridfahrzeug**
Hybrid vehicle
Véhicule hybride

(30) Priorität: 22.06.2006 DE 102006028582
(43) Veröffentlichungstag der Anmeldung: 26.12.2007
(73) Patentinhaber: Bayerische Motoren Werke Aktiengesellschaft, 80809 München (DE)
(72) Erfinder: Ohnemus, Ulrich, 82285 Hattenhofen (DE)

(56) Entgegenhaltungen:
- EP-A1- 0 492 152
- EP-A1- 1 253 036
- US-A1- 2005 101 432

## Beschreibung

Die vorliegende Erfindung betrifft ein Hybridfahrzeug gemäß dem Oberbegriff des Patentanspruchs 1.

Ein derartiges Hybridfahrzeug ist aus der EP 0 492 152 A1 bekannt. Zum technischen Hintergrund der Erfindung zählen die EP 1 253 036 A1 sowie die US 2005/0101432 A1.

Angesichts steigender Rohölpreise und immer restriktiver werdender Schadstoffgrenzwerte werden von zunehmend mehr Fahrzeugherstellern sogenannte "Hybridfahrzeugkonzepte" verfolgt. Unter dem Begriff "Hybridfahrzeug" wird in der vorliegenden Anmeldung ein Fahrzeug mit einem durch einen Verbrennungsmotor und ein Getriebe gebildeten konventionellen Antriebsstrang verstanden, bei dem zusätzlich ein Sekundärantriebsstrang mit mindestens einer elektrischen Maschine vorgesehen ist. Die elektrische Maschine kann, muss aber nicht notwendigerweise so ausgelegt sein, dass ein "elektrisches Fahren" möglich ist. Die elektrische Maschine kann auch für den Antrieb von Nebenaggregaten vorgesehen sein. Bei herkömmlichen Hybridkonzepten mit ein oder zwei elektrischen Maschinen sind diese üblicherweise unmittelbar in den Antriebsstrang integriert und im Bereich zwischen dem Verbrennungsmotor und dem Getriebe angeordnet.

Aufgabe der Erfindung ist es, ein kostengünstiges, für eine Vielzahl von Antriebsstrangkonzepten geeignetes Hybridkonzept zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug, insbesondere ein Hybridfahrzeug, mit einem "Primärantriebsstrang" und einem "Sekundärantrieb". Zum "Primärantriebsstrang" zählen ein Verbrennungsmotor mit einer sich in einer Längsrichtung des Verbrennungsmotors erstreckenden Kurbelwelle, einem auf einer Abtriebsseite des Verbrennungsmotors angeordneten Getriebe, sowie einer ersten Kopplungseinrichtung, die zwischen dem Verbrennungsmotor und dem Getriebe angeordnet ist und die eine Drehmomentkopplung des Getriebes vom Verbrennungsmotor ermöglicht. Bei der ersten Kopplungseinrichtung kann es sich beispielsweise um eine nasse oder trockene Reibkupplung handeln.

Der Sekundärantrieb ist im Wesentlichen durch eine Elektromaschine gebildet. Der Rotor der Elektromaschine, der im Folgenden auch als "E-Maschinenwelle" bezeichnet wird, ist parallel zur Kurbelwelle des Verbrennungsmotors angeordnet. Die E-Maschinenwelle kann über mindestens eine weitere Kopplungseinrichtung mit dem Primärantriebsstrang gekoppelt werden. Die Elektromaschine kann wahlweise als Generator oder als Motor betrieben werden. Der Generatorbetrieb kommt insbesondere zur Rückgewinnung von "Bremsenergie" in Frage, wobei mechanische bzw. kinetische Energie aus dem Antriebsstrang in elektrische Energie umgewandelt wird. Im Motorbetrieb kann vorgesehen sein, elektrisch erzeugte Antriebsenergie in den Primärantriebsstrang einzuspeisen oder Nebenaggregate wie z. B. einen Klimaanlagenkompressor, eine Hydraulikpumpe etc. anzutreiben.

Der Kern der Erfindung besteht darin, dass die Elektromaschine nicht in den Primärantriebsstrang integriert, insbesondere nicht koaxial zur Kurbelwelle angeordnet ist, sondern dass die Elektromaschine seitlich versetzt in Bezug auf die Kurbelwelle angeordnet ist.

Ein wesentlicher Vorteil dieses Konzepts besteht darin, dass je nach dem bei einem konkreten Fahrzeug vorhandenen elektrischen Leistungsbedarf ein Elektromotor mit entsprechender Baulänge verwendet werden kann. Bei herkömmlichen Hybridkonzepten, bei denen der Elektromotor in den Primärantriebstrang integriert ist, besteht häufig das Problem, dass die für den Elektromotor zur Verfügung stehende Baulänge sehr begrenzt bzw. nur in äußerst geringem Umfang variiert werden kann, ohne dass die übrigen Antriebsstrangkomponenten grundlegend verändert werden müssen. Demgegenüber kann bei dem Hybridkonzept der vorliegenden Erfindung eine Elektromaschine mit vergleichsweise geringem Durchmesser und großer Baulänge verwendet werden, was eine Anordnung im Motorraum erleichtert.

Ein Vorzug dieses Konzepts ist darin zu sehen, dass zwischen dem Primärtrieb und dem Sekundärtrieb eine Übersetzungseinrichtung angeordnet sein kann. Eine solche Übersetzungseinrichtung ermöglicht es, dass die E-Maschinenwelle schneller dreht als die Kurbelwelle des Verbrennungsmotors, was wiederum eine günstige Dimensionierung der Elektromaschine ermöglicht.

Über eine derartige Übersetzungseinrichtung kann der Verbrennungsmotor auch mittels der Elektromaschine gestartet werden. Die Elektromaschine kann zum Direktstart des Verbrennungsmotors verwendet werden, wobei auf der Kurbelwelle des Verbrennungsmotors oder auf der E-Maschinenwelle oder im Kraftfluss dazwischen eine Zusatzkupplung vorgesehen sein muss, welche eine Kopplung bzw. Entkopplung von E-Maschine und Verbrennungsmotor ermöglicht. Hiermit ist auch ein sogenannter "Impulsstart" des Verbrennungsmotors möglich, wobei die Elektromaschine bei geöffneter Zusatzkupplung zunächst auf Drehzahl, gebracht wird und anschließend die Zusatzkupplung geschlossen wird.

Alternativ dazu kann auch eine separate Kaltstarteinrichtung vorgesehen sein, mit der der Verbrennungsmotor direkt gestartet wird, wobei in diesem Fall ebenfalls eine Zusatzkupplung auf der Kurbelwelle des Verbrennungsmotors oder auf der E-Maschinenwelle oder im Kraftfluss dazwischen vorgesehen sein muss.

Alternativ dazu kann auch ein "Ritzelstarter" vorgesehen sein. Hierzu kann im Primärantriebsstrang im Bereich zwischen der Kurbelwelle und dem Getriebe ein Starterzahnrad vorgesehen sein, das mit einem verschieblich angeordneten Starterritzel zusammenwirkt, das zum Starten des Verbrennungsmotors in das Starterzahnrad "eingespurt" wird, ähnlich wie dies bei einem herkömmlichen Anlasser der Fall ist. Das Starterritzel kann verschieblich unmittelbar auf der E-Maschinenwelle oder parallel zur Maschinenwelle angeordnet sein. Die während des Startvorgangs erforderliche Leistung wird dabei von der Elektromaschine geliefert.

Zusätzlich zu einer derartigen "Starterzahnrad-Starterritzel"-Anordnung kann die weitere Kopplungseinrichtung eine Übersetzungsstufe und eine zugeordnete Kupplung aufweisen, über die bei geschlossener Kupplung die Elektromaschine mit der Kurbelwelle des Verbrennungsmotors koppelbar ist. Wenn sich der Verbrennungsmotor im warmen Betriebszustand befindet, d. h. wenn er sich leichter starten lässt als im kalten Zustand, kann unmittelbar über die Übersetzungsstufe und die Kurbelwelle gestartet werden.

Zusätzlich zum Starten des Verbrennungsmotors und zum Rückgewinnen von Bremsenergie kann die Elektromaschine zum Antrieb verschiedener Nebenaggregate verwendet werden. Ein bzw. mehrere solcher Nebenaggregate können unmittelbar mechanisch an die "Motorwelle" der Elektromaschine angekoppelt sein oder über entsprechende Übersetzungsstufen damit verbunden sein. Selbstverständlichen kann zwischen der E-Maschinenwelle und dem anzutreibenden Nebenaggregat bzw. den anzutreibenden Nebenaggregaten eine Kupplung angeordnet sein, mittels der der Nebenaggregatantrieb zu- bzw. abschaltbar ist.

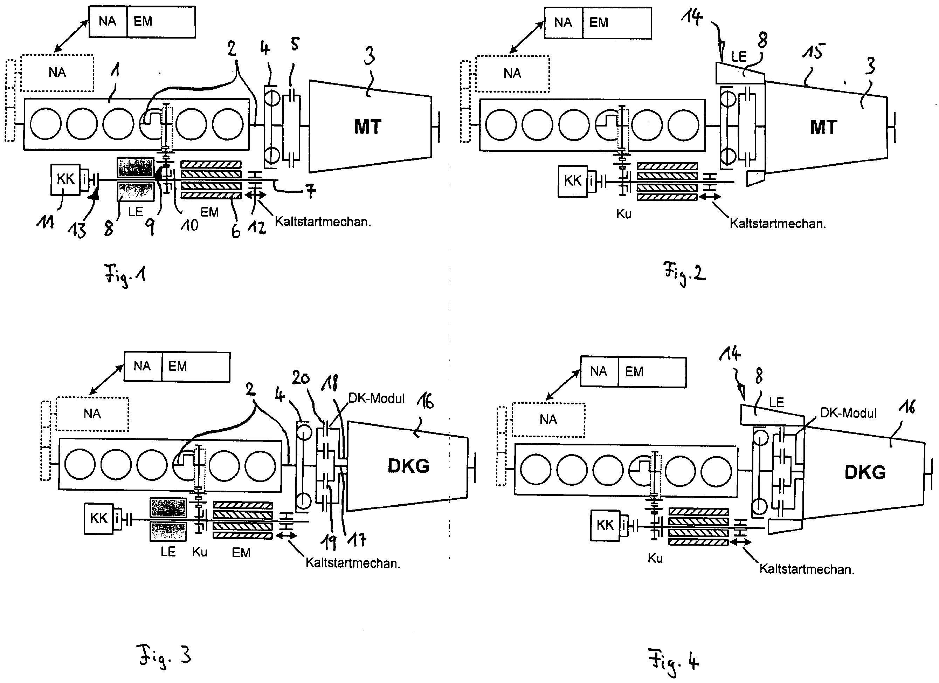

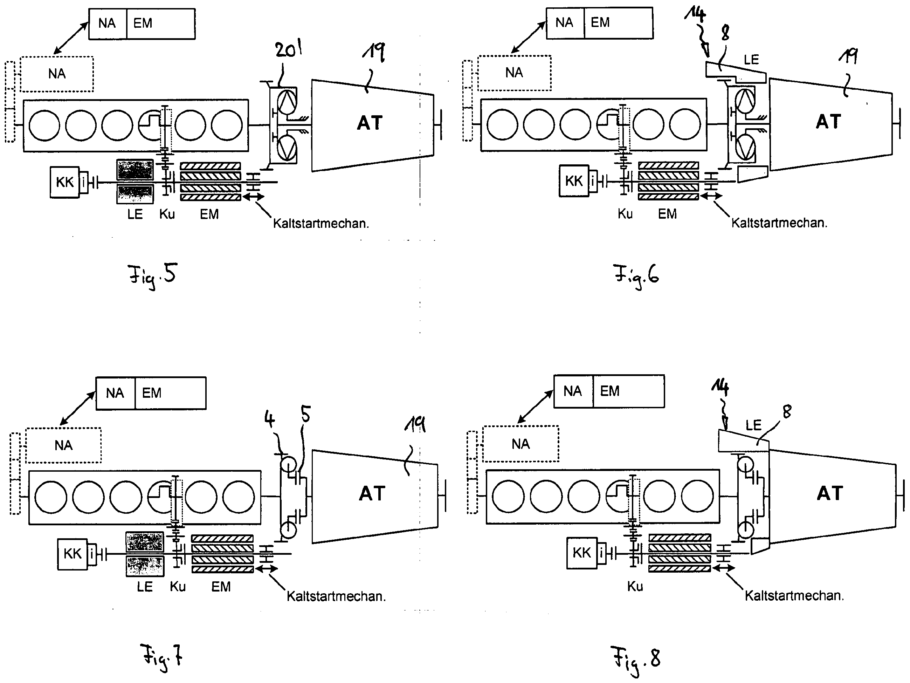

Im Folgenden wird die Erfindung im Zusammenhang mit der Zeichnung näher erläutert. Die Figuren 1 bis 21 zeigen verschiedene Varianten von Hybridtopologien mit seitlich versetzt zur Kurbelwelle des Verbrennungsmotors angeordneter Elektromaschine, wobei die in den Figuren 2, 4, 6, 8, 10, 11, 14,, 16 und 18 gezeigten Varianten nicht Gegenstand der in den Ansprüchen beanspruchten Erfindung sind.

Während die Figuren 1 - 8 zeigen sogenannte "Mild-Hybrid-Konzepte", mit einer E-Maschine, die nicht, zumindest aber nicht primär für rein elektrisches Fahren ausgelegt ist. Jedoch kann die elektrische Maschine als Zusatzantrieb eingesetzt werden.

Figur 1 zeigt ein erstes Ausführungsbeispiel eines Hybridantriebskonzepts gemäß der Erfindung. Der Hybridantrieb weist einen Verbrennungsmotor 1 mit einer sich in einer Längsrichtung des Verbrennungsmotors 1 erstreckenden Kurbelwelle 2 und einem Getriebe 3 auf, wobei es sich bei dem in Figur 1 gezeigten Ausführungsbeispiel um ein herkömmliches Handschaltgetriebe handelt. Auf der Abtriebsseite des Motors ist ein Zweimassenschwungrad 4 angeordnet, das dazu vorgesehen ist, Drehungleichförmigkeiten im Antriebsstrang zu dämpfen. Zwischen dem Zweimassenschwungrad 4 und dem Getriebeeingang ist eine Anfahrkupplung 5 vorgesehen. Der Verbrennungsmotor 1, die Kurbelwelle 2, das Zweimassenschwungrad 4, die Anfahrkupplung 5 und das Getriebe 3 bilden einen "Primärantriebsstrang" des Hybridantriebs, wie er in vielen herkömmlichen Fahrzeugen anzutreffen ist.

Seitlich neben dem Verbrennungsmotor 1 ist eine elektrische Maschine 6 angeordnet, die einen Rotor, der im Folgenden auch als "E-Maschinenwellle" 7 bezeichnet wird, aufweist. Die E-Maschinenwelle 7 ist parallel zur Kurbelwelle 2 des Verbrennungsmotors 1 angeordnet. Zur Steuerung der elektrischen Maschine 6 ist eine Leistungselektronik 8 vorgesehen. Da leistungsfähige elektrische Maschinen mit einer Betriebsspannung in der Größenordnung von 300 Volt betrieben werden, müssen Vorkehrungen getroffen werden, um eine Personengefährdung durch die elektrische Spannung auszuschließen. Aus diesem Grund und auch um Leitungsverluste zu minimieren, ist die Leistungselektronik 8 direkt an die elektrische Maschine 6 angeflanscht. Die E-Maschinenwelle 7 kann über eine mit einer Zahnradstufe 9 zusammenwirkenden Kupplung 10 mit der Kurbelwelle 2 drehgekoppelt werden. Anstatt der Zahnradstufe 9 kann auch eine andere "Übersetzungseinrichtung" bzw. Kopplungseinrichtung zwischen der E-Maschinenwelle 7 und der Kurbelwelle 2 vorgesehen sein, z.B. ein Ketten- oder Riementrieb.

Alternativ zu dem in Figur 1 gezeigten Ausführungsbeispiel muss der "Quertrieb" nicht notwendigerweise im mittleren Bereich des Verbrennungsmotors vorgesehen sein. Der Quertrieb kann auch im Bereich der Vorderseite oder der Rückseite des Kurbelgehäuses des Verbrennungsmotors angeordnet sein oder in einen Nockenwellensteuertrieb des Verbrennungsmotors integriert sein.

Wenn die Kupplung 10 geschlossen ist, sind die E-Maschinenwelle 7 und die Kurbelwelle 2 drehgekoppelt. Über die Zahnradstufe 9 kann der Verbrennungsmotor durch die elektrische Maschine 6 gestartet werden, insbesondere wenn der Verbrennungsmotor 1 betriebswarm ist, d. h. wenn das Anschleppmoment relativ gering ist. In diesem Fall arbeitet die elektrische Maschine 6 motorisch.

Umgekehrt kann die elektrische Maschine 6 als Generator betrieben werden. So kann die Kupplung 10 geschlossen werden, wenn der Verbrennungsmotor 1 im Schubbetrieb arbeitet, d. h. wenn das Fahrzeug dahinrollt bzw. abgebremst werden soll. In diesem Fall kann kinetische Energie aus dem Primärantriebsstrang über die Zahnradstufe 9 und die elektrische Maschine 6 in elektrische Energie umgewandelt werden, die dann in einer hier nicht näher dargestellten Speichereinrichtung, z. B. einer Batterie oder einem Kondensator, zwischengespeichert werden kann.

Mit der elektrischen Energie kann dann ein an die E-Maschinenwelle 7 angeflanschtes Nebenaggregat 11 angetrieben werden. Bei dem Nebenaggregat 11 kann es sich beispielsweise um einen Klimaanlagenkompressor, eine Hydraulikpumpe o. ä. handeln.

Auf der E-Maschinenwelle 7 ist ferner ein Starterritzel 12 verschieblich angeordnet. Ähnlich wie bei einem herkömmlichen Anlasser wirkt das Starterritzel 12 mit einem Starterzahnrad bzw. einem Starterzahnkranz zusammen, der drehfest mit dem Primärantriebsstrang, z. B. mit einem Gehäuse des Zweimassenschwungrads 4 verbunden ist. Durch "nach rechts Verschieben" des Starterritzels 12 kann dieses in das Starterzahnrad bzw. den Starterzahnkranz "eingespurt" werden, was dann eine Drehmomentübertragung von der elektrischen Maschine 6 auf den Primärantriebsstrang ermöglicht. Insbesondere wenn sich der Verbrennungsmotor 1 in kaltem Zustand befindet, kann über das Starterritzel 12 der Verbrennungsmotor 1 mit der elektrischen Maschine 6 gestartet werden.

Da der Quertrieb über die Zahnradstufe 9 und das Starterritzlel 12 unter-schiedliche Übersetzungen haben, muss zwischen der Kurbelwelle 2 und der E-Maschinenwelle 7 eine Kupplung vorgesehen sein. Bei dem in Figur 1 gezeigten Ausführungsbeispiel ist dies die Kupplung 10. Wird der Verbrennungsmotor 1 über das Starterritzel 12 gestartet, ist die Kupplung 10 geöffnet

Vollständigkeitshalber sei noch eine Kupplung 13 erwähnt, über die die die E-Maschinenwelle 7 mit dem Nebenaggregat 11 verbunden ist. Durch Öffnen der Kupplung 13 kann das Nebenaggregat 11 von der E-Maschinenwelle 7 abgekoppelt werden, was z. B. beim Starten des Motors von Vorteil ist.

Figur 2 zeigt eine Variante des Ausführungsbeispiels der Figur 1. Im Unterschied zum Ausbildungsbeispiel der Figur 1 ist hier die Leistungselektronik 8 in ein glockenartiges Ende 14 eines Getriebegehäuses 15 des Getriebes 3 integriert. Das glockenartige Ende 14 wird im Folgenden auch als "Getriebeglocke" bezeichnet.

Figur 3 zeigt eine Variante des Ausführungsbeispiels der Figur 1. Anstatt eines Handschaltgetriebes ist hier ein Doppelkupplungsgetriebe 16 vorgesehen, das eine erste Getriebeeingangswelle 17 und eine zweite koaxial dazu angeordnete als Hohlwelle ausgebildete Getriebeeingangswelle 18 aufweist, die über zugeordnete Kupplungen 19, 20 mit dem Zweimassenschwungrad 4 bzw. der Kurbelwelle 2 gekoppelt werden können. Ähnlich wie beim Ausführungsbeispiel der Figur 1 ist hier die Leistungselektronik in unmittelbarer Nähe der elektrischen Maschine 6 angeordnet.

Figur 4 zeigt eine weitere Variante mit einem Doppelkupplungsgetriebe 16, wobei hier die Leistungselektronik 8 ähnlich wie beim Ausführungsbeispiel der Figur 2 in die Getriebeglocke 14 integriert ist.

Figur 5 zeigt eine Variante des Ausführungsbeispiels der Figur 1,wobei hier anstatt des Handschaltgetriebes 3ein Automatikgetriebe 19 und anstatt des Zweimassenschwungrads 4 und der Anfahrkupplung 5 ein Drehmomentwandler 20 vorgesehen ist.

Figur 6 zeigt eine Variante des Ausführungsbeispiels der Figur 5, wobei hier die Leistungselektronik 8 in die Getriebeglocke 14 integriert ist.

Figur 7 zeigt eine weitere Variante mit einem Automatikgetriebe 19, wobei hier anstatt des Wandlers 20 (Figur 5) ein Zweimassenschwungrad 4 und eine Anfahrkupplung 5 vorgesehen ist. Alternativ dazu kann die Anfahrkupplung auch in das Automatikgetriebe 19 integriert sein.

Figur 8 zeigt eine Variante des Ausführungsbeispiels der Figur 7, wobei hier die Leistungselektronik, ähnlich wie bei den Ausführungsbeispielen der Figuren 2, 4 und 6, in die Getriebeglocke 14 integriert ist.

Die folgenden Ausführungsbeispiele so genannte "Strong- oder Full-Hybrid-Konzepte", d. h. Hybridantriebskonzepte, die ein rein elektrisch angetriebenes Fahren ermöglichen.

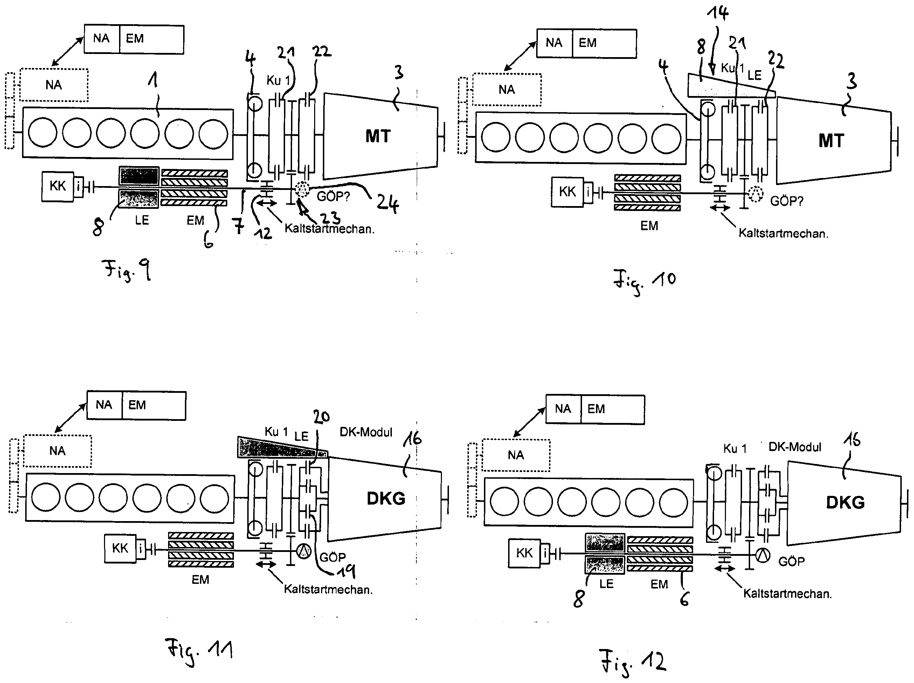

Beim Ausführungsbeispiel der Figur 9 ist zwischen dem Verbrennungsmotor 1 und dem als Handschaltgetriebe 3 ausgebildeten Getriebe ein Zweimassenschwungrad 4, eine erste Kupplung 21 und eine zweite Kupplung 22 angeordnet. Zwischen den beiden Kupplungen 21, 22 ist eine Zahnradstufe 23, über die die E-Maschinenwelle 7 permanent mit dem Primärantriebsstrang, d. h. mit dem Abtriebselement der Kupplung 21 bzw. mit dem Antriebselement der Kupplung 22 verbunden ist. Wenn die beiden Kupplungen 21, 22 geschlossen sind, wird das Fahrzeug in herkömmlicher Weise vom Verbrennungsmotor 1 angetrieben. Zusätzlich kann über die Zahnradstufe 23 Drehmoment, das von der elektrischen Maschine 6 erzeugt wird, in den Primärantriebsstrang eingeleitet werden. Umgekehrt kann im Schubbetrieb über die Zahnradstufe 23 kinetische Energie abgebaut und in elektrische Energie umgewandelt werden. Im Unterschied zu den Ausführungsbeispielen der Figuren 1 bis 8 ist hier die Leistungselektronik 8 unmittelbar an die elektrische Maschine angeflanscht, wodurch sich Leitungslängen minimieren lassen. Analog den Ausführungsbeispielen der Figuren 1 - 8 ist auf der E-Maschinenwelle 7 ein Starterritzel 12 verschieblich angeordnet, das mit einem hier nicht näher dargestellten Starterzahnrad bzw. Starterzahnkranz zusammenwirkt, der z. B. auf der motorseitigen Komponente der Kupplung 21 oder auf dem Gehäuse des Zweimassenschwungrads 4 angeordnet sein kann. Vollständigkeitshalber sei auch noch eine Getriebeölpumpe 24 erwähnt, die hier unmittelbar an die E-Maschinenwelle 7 angeflanscht ist.

Figur 10 zeigt eine Variante des Ausführungsbeispiels der Figur 9. Im Unterschied zu Figur 9 sind hier die Leistungselektronik 8, das Zweimassenschwungrad 4 sowie die beiden Kupplungen 21, 22 im Inneren der Getriebeglocke 14 des Handschaltgetriebes 3 angeordnet.

Das Ausführungsbeispiel der Figur 11 ist eine Variante des Ausführungsbeispiels der Figur 10, wobei hier anstatt eines Handschaltgetriebes ein Doppelkupplungsgetriebe 16 vorgesehen ist und anstatt der Kupplung 22 die beiden Kupplungen 19, 20 (vgl. Figur 3) vorgesehen sind.

Figur 12 zeigt eine Variante mit einem Doppelkupplungsgetriebe 16, bei der die Leistungselektronik 8 unmittelbar an die elektrische Maschine 6 angeflanscht ist.

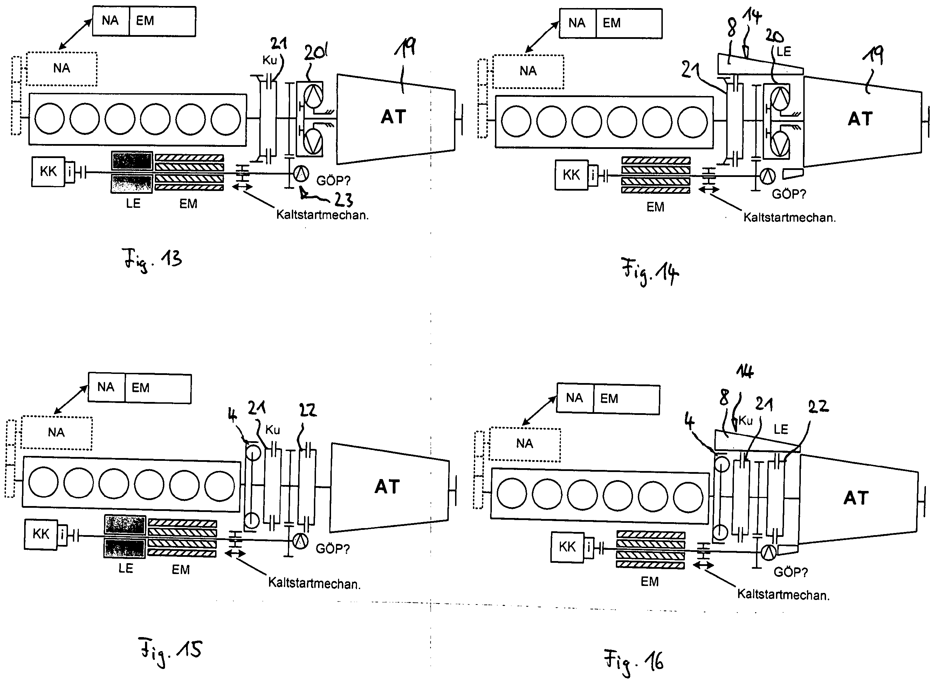

Figur 13 zeigt eine Variante des Ausführungsbeispiels der Figur 9. Anstatt eines manuellen Handschaltgetriebes ist hier ein Automatikgetriebe 19 vorgesehen. Anstatt der Kupplung 22 ist hier ein Drehmomentwandler 20 vorgesehen. Die Zahnradstufe 23 ist dementsprechend zwischen der Kupplung 21 und dem Drehmomentwandler 20 angeordnet.

Figur 14 zeigt eine Variante des Ausführungsbeispiels der Figur 13, wobei hier die Leistungselektronik 8, die Kupplung 21 sowie der Drehmomentwandler 20 in die Getriebeglocke 14 des Automatikgetriebes 19 integriert sind.

Figur 15 zeigt eine Variante des Ausführungsbeispiels der Figur 13, wobei hier anstatt des Drehmomentwandlers 20 eine Kupplung 22 vorgesehen ist, analog dem Ausführungsbeispiel der Figur 9.

Figur 16 zeigt eine Variante des Ausführungsbeispiels der Figur 15, wobei hier die Leistungselektronik 8, das Zweimassenschwungrad 4, sowie die beiden Kupplungen 21, 22 in die Getriebeglocke 14 integriert sind.

Auch bei den Ausführungsbeispielen der Figuren 15 und 16 könnte die Anfahrkupplung auch in das Automatikgetriebe 19 integriert sein.

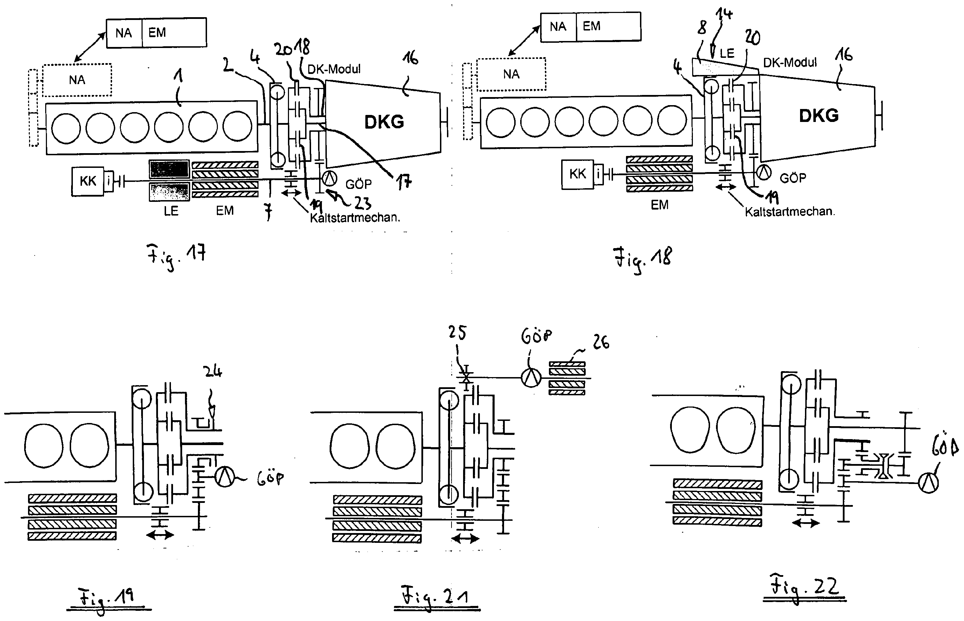

Figur 17 zeigt ein Ausführungsbeispiel mit einem Doppelkupplungsgetriebe 16. Die äußere Getriebeeingangswelle 18 ist hier über die Zahnradstufe 23 permanent mit der E-Maschinenwelle 7 drehgekoppelt über die beiden Kupplungen 19, 20 können wahlweise oder zeitlich überschneidend die beiden Getriebeeingangswellen 17, 18 mit dem Zweimassenschwungrad 4 bzw. mit der Kurbelwelle 2 des Verbrennungsmotors 1 drehgekoppelt werden. Die E-Maschinenwelle 7 treibt hier unmittelbar eine Getriebeölpumpe GÖP an.

Figur 18 zeigt eine Variante des Ausführungsbeispiels der Figur 17, wobei hier die Leistungselektronik, das Zweimassenschwungrad 4 sowie die beiden Eingangskupplungen 19, 20 des Doppelkupplungsgetriebes 16 in der Getriebeglocke 14 untergebracht sind. Auch hier treibt die E-Maschinenwelle 7 unmittelbar eine Getriebeölpumpe GÖP an.

Figur 19 zeigt ein Ausführungsbeispiel mit einem hier nicht näher dargestellten Doppelkupplungsgetriebe, wobei die Getriebeölpumpe GÖP über eine Kupplung 24 mit einer der beiden Getriebeeingangswellen drehkoppelbar ist.

Figur 20 zeigt ein Ausführungsbeispiel, bei dem die Getriebeölpumpe GÖP über einen Freilauf 25 von einer Eingangswelle des Doppelkupplungsgetriebes angetrieben werden kann. Bei einem Stillstand der Eingangswelle des Doppelkupplungsgetriebes kann der Getriebeölpumpe GÖP mittels eines kleinen separaten Elektromotors 26 angetrieben werden.

Figur 22 zeigt ein Ausführungsbeispiel, bei dem die Getriebeölpumpe GÖP von dem ersten oder dem zweiten Teilgetriebe des Doppelkupplungsgetriebes angetrieben wird, je nachdem, welches der beiden Teilgetriebe gerade Drehmoment überträgt.

Die in den Figuren, insbesondere die in den Figuren 19-22 beschriebenen Konzepte können auch miteinander kombiniert werden.

## Patentansprüche

1. Fahrzeug, insbesondere Hybridfahrzeug, mit
• einem Primärantriebsstrang, der folgendes aufweist:
∘ einen Verbrennungsmotor (1) mit einer Kurbelwelle (2), die sich in einer Längsrichtung des Verbrennungsmotors (1) erstreckt, ,
∘ ein auf einer Abtriebsseite des Verbrennungsmotors (1) angeordnetes Getriebe (3, 16, 19),
∘ eine erste Kopplungseinrichtung (5, 19, 20, 20', 21, 22), die zwi- ' schen dem Verbrennungsmotor (1) und dem Getriebe (3, 16, 19) angeordnet ist und die eine Drehmomentkopplung des Getriebes (3, 16, 19) vom Verbrennungsmotor (1) ermöglicht; und
• einem Sekundärantrieb, der eine Elektromaschine (6) mit einer E-Maschinenwelle (7) aufweist, die parallel zur Kurbelwelle (2) des Verbrennungsmotors (1) ist, wobei die E-Maschinenwelle (7) mittels mindestens einer weiteren Kopplungseinrichtung (9, 12, 23) mit dem Primärantriebsstrang koppelbar ist, wobei vorgesehen ist, dass die Elektromaschine (6) wahlweise als Generator arbeitet, indem mechanische Energie aus dem Primärantriebsstrang in elektrische Energie umgewandelt wird, oder als Elektromotor, wobei die Elektromaschine (6) seitlich versetzt in Bezug auf die Kurbelwelle (2) angeordnet ist,
**dadurch gekennzeichnet, dass** eine Leistungselektronik (8) zur Steuerung der Elektromaschine (6) vorgesehen ist, wobei die Leistungselektronik (8) unmittelbar an die Elektromaschine (6) angeflanscht ist.

2. Fahrzeug nach Anspruch 1, **dadurch gekennzeichnet, dass** die mindestens eine weitere Kopplungseinrichtung (9, 12, 23) ein Starterzahnrad aufweist, das im Bereich zwischen der Kurbelwelle (2) und dem Getriebe (3, 16, 19) angeordnet ist und ein auf oder parallel zu der E-Maschinenwelle (7) verschieblich angeordnetes Starterritzel (12), das zum Starten des Verbrennungsmotors (1) in das Starterzahnrad einspurbar ist.

3. Fahrzeug nach einem der Ansprüche 1 oder 2, **dadurch gekennzeichnet, dass** die mindestens eine weitere Kopplungseinrichtung über eine Kupplung (10) und eine Übersetzungsstufe (9) mit der Kurbelwelle (2) des Verbrennungsmotors (1) koppelbar ist, wobei die Elektromaschine (6) bei geschlossener Kupplung (10) zum Starten des Verbrennungsmotors (1) eingesetzt werden kann.

4. Fahrzeug nach einem der vorangehenden Ansprüche, **dadurch gekennzeichnet, dass** mindestens ein Nebenaggregat (11, 24) des Fahrzeugs vorgesehen ist, das mechanisch von der E-Maschinenwelle (7) antreibbar ist.

5. Fahrzeug nach einem der vorangehenden Ansprüche, **dadurch gekennzeichnet, dass** die Elektromaschine (6) seitlich neben dem Verbrennungsmotor (1) angeordnet ist.

6. Fahrzeug nach einem der Ansprüche 1 bis 5, **dadurch gekennzeichnet, dass** das Getriebe ein Handschaltgetriebe ist.

7. Fahrzeug nach einem der Ansprüche 1 bis 5, **dadurch gekennzeichnet, dass** das Getriebe ein Doppelkupplungsgetriebe ist.

8. Fahrzeug nach einem der Ansprüche 1 bis 5, **dadurch gekennzeichnet, dass** das Getriebe ein Automatikgetriebe ist.

## Claims

1. A vehicle, especially a hybrid vehicle, having
• a primary drive train which has the following:
• an internal combustion engine (1) with a crankshaft (2) which extends in a longitudinal direction of the internal combustion engine (1),
• a transmission (3, 16, 19) arranged on an output side of the internal combustion engine (1),
• a first coupling means (5, 19, 20, 20', 21, 22) which is arranged between the internal combustion engine (1) and the transmission (3, 16, 19) and which permits torque coupling of the transmission (3, 16, 19) by the internal combustion engine (1); and
• a secondary drive which has an electric machine (6) with an electric-machine shaft (7) which is parallel to the crankshaft (2) of the internal combustion engine (1), wherein the electric-machine shaft (7) can be coupled by means of at least one further coupling means (9, 12, 23) to the primary drive train, wherein provision is made for the electric machine (6) to operate either as a generator, by converting mechanical energy from the primary drive train into electric power, or as an electric motor, wherein the electric machine (6) is arranged laterally offset in relation to the crankshaft (2),
**characterised in that** power electronics (8) are provided for controlling the electric machine (6), the power electronics (8) being flanged directly to the electric machine (6).

2. A vehicle according to Claim 1, **characterised in that** the at least one further coupling means (9, 12, 23) has a starter gearwheel which is arranged in the region between the crankshaft (2) and the transmission (3, 16, 19) and a starter pinion (12) arranged displaceably on or parallel to the electric-machine shaft (7), which pinion can be engaged in the starter gearwheel in order to start the internal combustion engine (1).

3. A vehicle according to one of Claims 1 or 2, **characterised in that** the at least one further coupling means can be coupled by means of a clutch (10) and a transmission stage (9) with the crankshaft (2) of the internal combustion engine (1), the electric machine (6) when the clutch (10) is closed being able to be used for starting the internal combustion engine (1).

4. A vehicle according to one of the preceding claims, **characterised in that** at least one ancillary unit (11, 24) of the vehicle is provided which can be driven mechanically by the electric-machine shaft (7).

5. A vehicle according to one of the preceding claims, **characterised in that** the electric machine (6) is arranged laterally next to the internal combustion engine (1).

6. A vehicle according to one of Claims 1 to 5, **characterised in that** the transmission is a manual gearbox.

7. A vehicle according to one of Claims 1 to 5, **characterised in that** the transmission is a twin-clutch transmission.

8. A vehicle according to one of Claims 1 to 5, **characterised in that** the transmission is an automatic transmission.

## Revendications

1. Véhicule particulier, véhicule hybride comprenant :
- une ligne d'entraînement primaire comportant :
- un moteur à combustion interne (1) équipé d'un vilebrequin (2), qui s'étend dans la direction longitudinale de ce moteur à combustion interne (1),
- une boîte de vitesses (3, 16, 19), montée du côté de la sortie du moteur à combustion interne (1),
- un premier dispositif de couplage (5, 19, 20, 20', 21, 22), monté entre le moteur à combustion interne (1) et la boîte de vitesses (3, 16, 19), et permettant de découpler le couple de la boîte de vitesses (3, 16, 19) par rapport au moteur à combustion interne (1), et
- un entraînement secondaire comportant une machine électrique (6) équipée d'un arbre de machine électrique (7) qui est parallèle au vilebrequin (2) du moteur à combustion interne, l'arbre (7) de la machine électrique pouvant être couplé au moyen d'un autre dispositif de couplage (9, 12, 23) à la ligne d'entraînement primaire, véhicule dans lequel il est prévu que la machine électrique (6) puisse sélectivement fonctionner en tant que générateur du fait que l'énergie mécanique provenant de la ligne d'entraînement primaire soit transformée en énergie électrique, ou en tant que moteur électrique, la machine électrique (6) étant décalée latéralement par rapport au vilebrequin (2),
**caractérisé en ce qu'**
il est prévu, une électronique de puissance (8) permettant de commander la machine électrique (6), cette électronique de puissance (8) étant directement bridée sur la machine électrique (6).

2. Véhicule conforme à la revendication 1,
**caractérisé en ce que**
l'autre dispositif de couplage (9, 12, 23) comporte une roue dentée de démarreur montée dans la zone située entre le vilebrequin (2) et la boîte de vitesses (3, 16, 19), et un pignon de démarreur (12) monté mobile en translation sur ou parallèlement à l'arbre (7) de la machine électrique, qui, peut engrener avec la roue dentée de démarreur pour permettre de démarrer le moteur à combustion interne (1).

3. Véhicule conforme à l'une des revendications 1 et 2,
**caractérisé en ce que**
l'autre dispositif de couplage peut être couplé par l'intermédiaire d'un embrayage (10) et d'un étage de démultiplication (9) au vilebrequin (2) du moteur à combustion interne (1), lorsque l'embrayage (10) est fermé, la machine électrique (6) pouvant être mise en oeuvre pour démarrer le moteur à combustion interne (1).

4. Véhicule conforme à l'une des revendications précédentes,
**caractérisé en ce qu'**
il est prévu au moins un ensemble secondaire (11, 24) du véhicule qui peut être entraîné mécaniquement par l'arbre (7) de la machine électrique.

5. Véhicule conforme à l'une des revendications précédentes,
**caractérisé en ce que**
la machine électrique (6) et montée latéralement à proximité du moteur à combustion interne (1).

6. Véhicule conforme à l'une des revendications 1 à 5,
**caractérisé en ce que**
la boîte de vitesses et une boîte de vitesses à commutation manuelle.

7. Véhicule conforme à l'une des revendications 1 à 5,
**caractérisé en ce que**
la boîte de vitesses et une boîte de vitesses à double embrayage.

8. Véhicule conforme à l'une des revendications 1 à 5,
**caractérisé en ce que**
la boîte de vitesses et une boîte de vitesses automatique.
